# EUROPEAN PATENT APPLICATION

(11) **EP 4 765 939 A1**
(43) Date of publication of application: **24.06.2026**
(21) Application number: 25222934.9
(22) Date of filing: 12.12.2025
(51) Int. Cl.: H04W 24/10, H04W 24/02

(54) **TECHNOLOGIES FOR USER EQUIPMENT MEASUREMENT PATTERN CONTROL**

(30) Priority: 20.12.2024 US 202463737569 P; 19.11.2025 US 202519394697
(71) Applicant: Apple Inc., Cupertino, CA 95014 (US)
(72) Inventor: LOW, Su-Lin, Cupertino, 95014 (US)
(74) Representative: COPA Copenhagen Patents

(57) **Abstract**

The present application relates to devices and components including apparatus, systems, and methods for measurement pattern control in a wireless network.

## Description

### CROSS-REFERENCE TO RELATED APPLICATION

This application claims priority to U.S. Patent Application No. 19/394,697, entitled "TECHNOLOGIES FOR USER EQUIPMENT MEASUREMENT PATTERN CONTROL," filed on November 19, 2025, which claims priority to U.S. Provisional Patent Application No. 63/737,569, entitled "TECHNOLOGIES FOR USER EQUIPMENT MEASUREMENT PATTERN CONTROL," filed on December 20, 2024.

### TECHNICAL FIELD

This application relates generally to communication networks and, in particular, to technologies for user equipment measurement pattern control.

### BACKGROUND

Third Generation Partnership Project (3GPP) Technical Specifications (TSs) define standards for wireless networks. These TSs describe aspects related to signaling traffic through systems that incorporate wireless networks.

### BRIEF DESCRIPTION OF THE DRAWINGS

FIG. 1 illustrates a network environment in accordance with some embodiments.
FIG. 2 illustrates an example timeline of a connected-mode discontinuous reception (C-DRX) cycle and measurements that may be performed in a C-DRX gap in accordance with some embodiments.
FIG. 3 illustrates an example measurement pattern controller in accordance with some embodiments.
FIG. 4 illustrates an example timeline depicting various operations associated with measurement pattern control in accordance with some embodiments.
FIG. 5 illustrates an example of measurement pattern selection in accordance with some embodiments.
FIG. 6 illustrates a framework for updating one or more condition thresholds for measurement pattern selection in accordance with some embodiments.
FIG. 7 illustrates a procedure for updating one or more condition thresholds for measurement pattern selection in accordance with some embodiments.
FIG. 8A illustrates an example of training of a machine learning (ML) model for measurement pattern selection in accordance with some embodiments.
FIG. 8B illustrates the ML model of FIG. 8A when deployed, in accordance with some embodiments.
FIG. 9 illustrates an operational flow or algorithmic structure in accordance with some embodiments.
FIG. 10 illustrates another operational flow or algorithmic structure in accordance with some embodiments.
FIG. 11 illustrates another operational flow or algorithmic structure in accordance with some embodiments.
FIG. 12 illustrates a user equipment in accordance with some embodiments.
FIG. 13 illustrates a network device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triplecore processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component or asset within a computing or network environment, or a physical or virtual component within, accessible by, or available to a device or component. Resources could include, but are not limited to, memory space/usage, processor/CPU time, processor/CPU usage, processor and accelerator loads, hardware time or usage, electrical power, input/output operations, ports or network sockets, channel/link allocations, throughput, or workload units. A "hardware resource" may refer to compute, storage, or networking resources provided by physical hardware elements. A "virtualized resource" may refer to compute, storage, or networking resources provided by virtualization infrastructure to an application, device, or system. The term "communication resource" may refer to resources that are accessible by, or available to, computer devices/systems for transferring information over a channel of a communication network. For example, communication resources may include, but are not limited to, time/frequency resources, code resources, modulation resources, etc. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

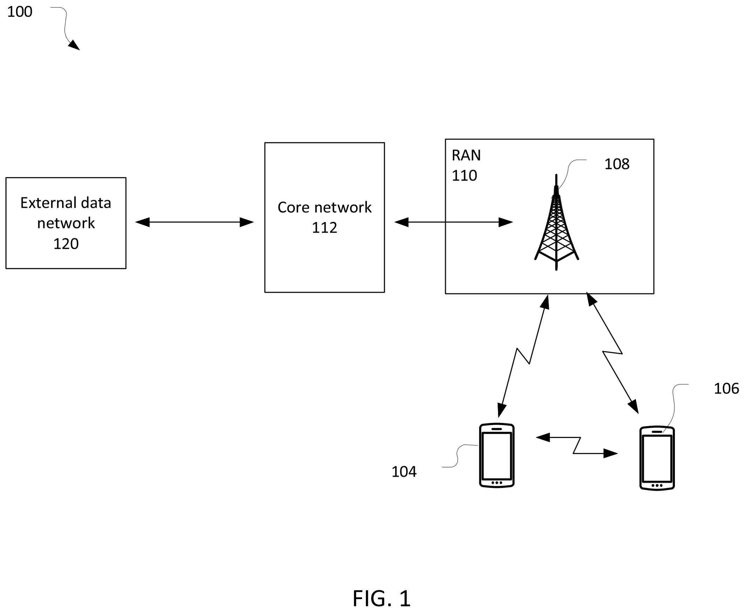

FIG. 1 illustrates a network environment 100 in accordance with some embodiments. The network environment 100 may include user equipment (UE) 104 communicatively coupled with base station 108 of a radio access network (RAN) 110. The UE 104 and the base station 108 may communicate over air interfaces compatible with 3GPP TSs, such as those that define a Fifth Generation (5G) new radio (NR) system or a later system (e.g., Sixth Generation (6G) system). The base station 108 may provide user plane (UP) and control plane (CP) protocol terminations toward the UE 104.

The network environment 100 may further include a core network (CN) 112. For example, the CN 112 may comprise a 5^{th} Generation Core network (5GC), a 6th Generation Core network (6GC), or later generation core network. The CN 112 may be coupled to the base station 108 via a fiber optic or wireless backhaul. The CN 112 may provide functions for the UE 104 via the base station 108. These functions may include managing subscriber profile information, subscriber location, authentication of services, or switching functions for voice and data sessions.

The network environment 100 may further include a data network 120. Data network 120 may include a system of interconnected nodes that facilitate data transmission between UE 104 and various application servers and other service providers. The base station 108 and the core network 112 may route application data between the UE 104 and external data network 120 or application servers. These application servers host web applications, cloud storage, and multimedia streaming services, which communicate with the UE 104 via standardized protocols and interfaces defined by 3GPP, ensuring secure and efficient data exchange.

In some embodiments, the network environment 100 may also include UE 106. The UE 106 may be coupled with the UE 104 via a sidelink interface. In some embodiments, the UE 106 may act as a relay node to communicatively couple the UE 104 to the RAN 110. In other embodiments, the UE 106 and the UE 104 may represent end nodes of a communication link (e.g., for sidelink communication). For example, the UEs 104 and 106 may exchange data with one another.

Operations described herein as performed by a device (for example, UE 104, UE 106, base station 108, and/or a device of core network 112) may be fully, substantially, or partially performed by processing circuitry implemented on the device. Additionally, operations described herein as performed by "the network" may be performed by a device of the RAN 110 (e.g., base station 108), a device of the core network 112, and/or components thereof.

Base station 108 may configure UE 104 with discontinuous reception (DRX). DRX is a power-saving technique employed to increase the battery life of UE 104. With DRX, UE 104 may periodically switch off its receiver and enter a low-power state when there is no data to receive, thereby conserving energy. DRX configuration may include parameters such as the on-duration timer, inactivity timer, and DRX cycle length, which dictate when the UE should perform a wake up procedure to check for incoming data. This mechanism is particularly beneficial for prolonging the battery life of devices such as smartphones, wearable devices, and Internet of Things (IoT) devices, which often need to operate on limited power sources for extended periods.

Connected-mode DRX (C-DRX) is a specific implementation of DRX. While DRX generally pertains to radio resource control (RRC) idle mode, C-DRX is designed for scenarios where the UE 104 is in an active data session, e.g., RRC connected mode, but still requires power-saving mechanisms. In C-DRX, the UE 104 alternates between periods of active reception and low-power state even while maintaining an active connection with the network. This is achieved by coordinating the DRX cycles with the network's scheduling decisions, allowing the UE 104 to manage its power consumption without compromising the quality of service (QoS). In some embodiments, C-DRX configurations are dynamically adjusted based on the UE's activity level and network conditions, providing a more granular control over power saving and latency management.

The configuration and optimization of DRX parameters are crucial for balancing the trade-off between energy efficiency and latency, ensuring that the UE 104 may promptly respond to network signaling and data transmission requirements. In some instances, the network (e.g., base station 108 or core network 112) may control and configure C-DRX parameters. The C-DRX configuration may include several parameters, each with several possible values, creating a large number of C-DRX possible configurations based on different combinations of values for each parameter. The large number of C-DRX possible configurations makes determining the values of all the parameters to achieve a trade-off between power saving and performance complex.

In some instances, network operators may create one or more C-DRX profiles. A C-DRX profile may refer to a predefined set of parameters and settings that dictate how the C-DRX mechanism may operate under specific conditions. These profiles may be designed to optimize the UE's power consumption and network performance based on various factors, such as the type of application being used, network conditions, or user preferences. Different profiles may be configured or activated by the base station 108 based on the context, such as streaming video, browsing the Internet, or being in a low-coverage area. In some instances, the profile may be selected by the base station 108 or manually by the user of the UE 104. The C-DRX profiles may be designed based on the quality of experience (QoE) or QoS parameters of an application (e.g., a videoconferencing application, extended reality (XR) application, gaming application, another multimedia application, a web browser, etc.) or application type (e.g., streaming, gaming, browsing, etc.).

For example, the C-DRX streaming profile may be designed for low-latency, high-speed data transfer; the browsing profile may be balanced between power saving and moderate latency; and the idle profile may be designed for maximum power saving when the device is not actively used. The network might select the streaming profile when the user starts streaming a video. The parameters defined in the streaming profile (e.g., shorter DRX cycles and small sleep periods) are instantiated as the current C-DRX configuration for the UE 104. This configuration may actively manage the UE's DRX behavior based on the streaming profile's settings.

The C-DRX configuration may refer to the set of parameters (and their set values) applied to the UE 104 to manage its DRX behavior. For example, the configuration may include specific values for various DRX parameters, such as 'onDurationTimer,' 'drx-InactivityTimer,' 'drx-RetransmissionTimer,' 'longDRX-Cycle,' 'shortDRX-Cycle,' and 'drxShortCycleTimer.' When a C-DRX profile is selected and applied, the predefined settings from the C-DRX profile are instantiated as the current C-DRX configuration. In this sense, the C-DRX configuration is the specific application of the profile's parameters to the device's current operating environment.

The UE 104 may wakeup in a C-DRX gap between configured reception periods to perform one or more measurements. For example, the UE 104 may perform one or more of the following measurements in a C-DRX gap: radio resource management (RRM) intra-frequency neighbor measurements, serving cell beam measurements (e.g., on channel state information (CSI)-reference signal (RS) and/or synchronization signal block (SSB)) for beam management (e.g., P1 measurement for beam selection), secondary cell (SCell) RRM intra-frequency measurements, inter-frequency neighbor cell measurements, and/or tracking reference signal (TRS) measurements.

Typically, the rate of measurements is based on channel and/or mobility conditions. However, the rate of measurements does not take into account other QoS metrics, such as latency, bit error rate, data throughput, call drop, and/or handoff success rate, which may lead to a mismatch between the measurement rate and the user experience. For example, a high rate of measurements triggered by poor channel and/or mobility conditions may be unnecessary when the QoS metrics are good, while a low rate of measurements triggered by good channel and/or mobility conditions may be insufficient when the QoS metrics are poor.

The frequent wakeups in C-DRX gaps are particularly challenging in Frequency Range 2 (FR2) operation, since FR2 C-DRX cycles are typically shorter than FR1 C-DRX cycles (e.g., 80 to 512 milliseconds (ms) for FR2 and 320 to 1240 ms for FR1) and more frequent beam measurements may be needed to track millimeter wave (mmW) beams, especially in high mobility conditions, to facilitate reception and transmission when the modem wakes up in a C-DRX on time. The frequent wakeups can lead to high power consumption.

Embodiments herein provide a framework to dynamically determine a measurement pattern for UE measurements based on one or more conditions. For example, a measurement pattern controller may be configured with a set of candidate measurement patterns and select one of the candidate measurement patterns to use based on a comparison of one or more conditions to respective condition thresholds. The set of candidate measurement patterns may be configured by the network or pre-defined. The measurement pattern controller may further plan and schedule the measurements (e.g., including RF circuitry wakeups if applicable) and/or handle any concurrencies between scheduled measurements. In some embodiments, the measurement pattern controller may perform self-learning based on feedback from prior cycles, such as one or more QoS metrics and/or user situation information. For example, the measurement pattern controller may adjust the one or more condition thresholds based on the one or more QoS metrics. The techniques described herein may improve user experience while also avoiding unnecessary measurements/wakeups and thereby reducing power consumption.

Various embodiments are described with respect to measurement pattern selection for one or more measurements in a C-DRX gap. However, the embodiments herein may additionally or alternatively be used for other types of measurement patterns, such as multi-panel measurement patterns (e.g., for mmW antenna panels), idle mode frequency scanning measurement patterns, and/or multiple-component carrier (CC) measurement patterns.

Embodiments herein for C-DRX measurement patterns may be particularly beneficial for FR2 communication. For example, the UE 104 may be in standalone FR2 connected mode and/or in Evolved-Universal Terrestrial Radio Access Network (E-UTRAN) New Radio (NR) dual connectivity (ENDC) with LTE/FR1 as the main cell group (MCG) and FR2 as the secondary cell group (SCG). However, the embodiments herein may also be used for communication in FR1 and/or another frequency band.

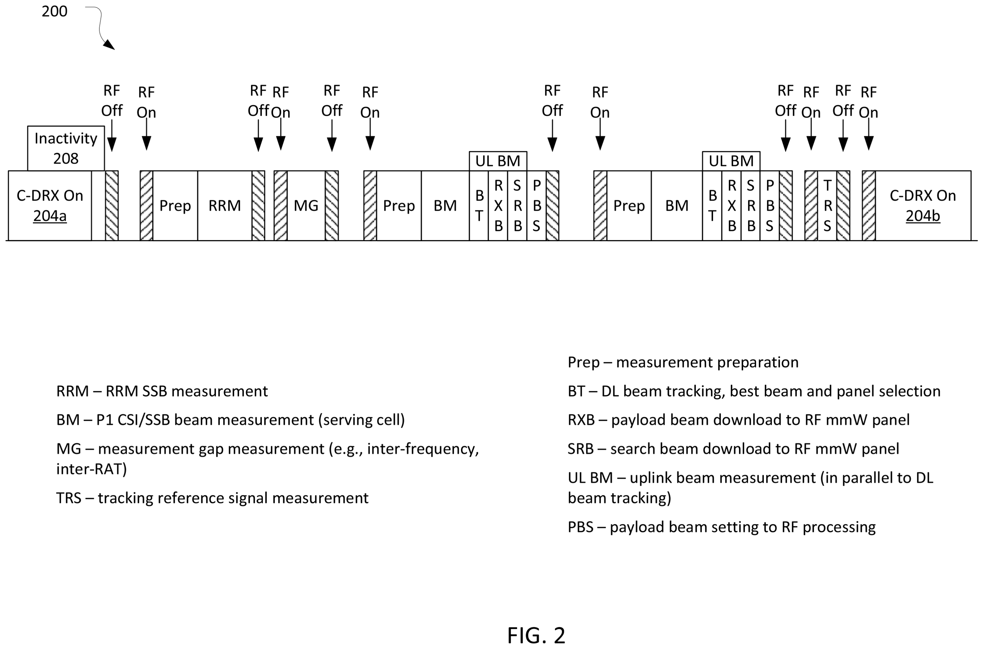

FIG. 2 illustrates an example timeline 200 of a C-DRX cycle and measurements that may be performed by a UE (e.g., UE 104) in a C-DRX gap in accordance with some embodiments. In an example, the timeline 200 may correspond to FR2 communication. The RF circuitry of the UE may be powered on during C-DRX on periods 204a and 204b. The UE may power off the RF circuitry in between the C-DRX on periods 204a and 204b (e.g., after an inactivity period 208). The time between the C-DRX on periods 204a and 204b may be referred to as the C-DRX gap. The UE may perform one or more measurements in the C-DRX gap that require the UE to power on the RF circuitry. In some embodiments, the UE may receive a configuration from the network that indicates the measurements to perform in the C-DRX gap and/or indicates resources for measurement occasions in which the measurements can be performed (e.g., in which a corresponding reference signal will be transmitted).

Some examples of measurements that may be performed in the C-DRX gap are depicted in FIG. 2. As shown, the measurement may include one or more RRM measurements (e.g., RRM SSB measurements), beam measurements (e.g., P1 CSI and/or SSB beam measurements on the serving cell), measurement gap measurements (e.g., inter-frequency and/or inter-RAT measurements), and/or tracking reference signal (TRS) measurements. One or more of the measurements may require the RF circuitry to be powered on for a preparation time (Prep) prior to performing the measurement (e.g., for RF tuning and/or other operations). Additionally, the RF circuitry may remain powered on to perform one or more operations after the measurement is performed. For example, as shown in FIG. 2, after the beam measurements, the UE may perform payload beam download to the RF mmW panel (RXB), search beam download to the RF mmW panel (SRB), and/or payload beam setting to RF processing (PBS). In some instances, the UE may perform uplink beam measurement (UL BM) in parallel with the BT, RXB, SRB, and/or PBS.

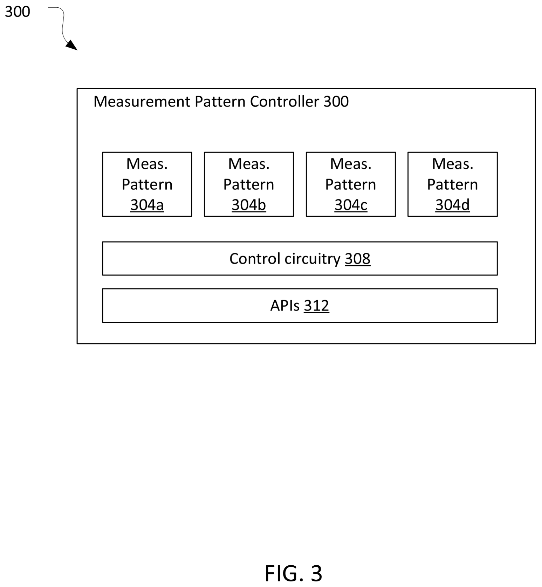

FIG. 3 illustrates an example measurement pattern controller 300 in accordance with some embodiments. The measurement pattern controller 300 may be implemented by a UE, e.g., UE 104 or UE 1200, or components thereof (e.g., processor circuitry, such as processor circuitry 1204a).

The measurement pattern controller 300 may store configuration information for multiple measurement patterns 304a-d. In an example, the measurement patterns 304a-d may correspond to C-DRX measurement patterns. The measurement patterns 304a-d may correspond to a sequence of measurements, also referred to as a pattern sequence. The measurement patterns 304a-d may include different measurement frequencies (e.g., periodicities), pattern lengths, measurement types, and/or other measurement parameters. The measurement patterns 304a-d may correspond to, for example, C-DRX measurement patterns, multi-panel measurement patterns (e.g., for mmW antenna panels), idle mode frequency scanning measurement patterns, and/or multiple CC measurement patterns.

The measurement pattern controller 300 may include control circuitry 308 to select a measurement pattern (e.g., among the measurement patterns 304a-d) and control and/or track pattern execution progress. For example, the control circuitry 308 may track the pattern sequence and length (which may correspond to one or more C-DRX cycles) to ensure that all of the measurements associated with the respective measurement pattern are performed within the pattern length. The control circuitry 308 may include and/or have access to one or more counters and/or flags to control and/or track pattern execution.

The measurement pattern controller 300 (e.g., control circuitry 308) may have access to one or more controller application programming interfaces (APIs) 312 to perform measurement pattern control operations in accordance with embodiments herein. For example, the controller APIs 312 may include one or more of the following:
- AddPattern() - Adds a new pattern sequence instance to the menu of available patterns.
- PatternSelect() - Selects the best Pattern sequence for the upcoming cycle (e.g., based on condition thresholds as described herein).
- Schedule() - Plans and calculates the wakeup times for each measurement of the selected pattern.
- Evaluate() - Returns current pattern measurement type. The evaluate API may be used for evaluation and control of the measurement type specific to the current pattern in use, e.g., for each wakeup. Options may be available in the pattern control for skip, repeat, and/or abort.
- ConcurrencyHandling() - Checks if scheduled measurement overlaps with another event and if so, how to resolve the conflict. For example, the ConcurrencyHandling API may determine if the scheduled measurement can be done in parallel with the other event and, if not, reschedule the measurement to a different time.
- MeasDone() - Increments the pattern counter after each measurement is executed. This API may maintain state variables (e.g., to track progress of the measurement pattern).
- SelfLearningUpdate() - Adjusts the condition thresholds as further described herein, e.g., based on user situation and/or QoS metrics meeting specified targets.

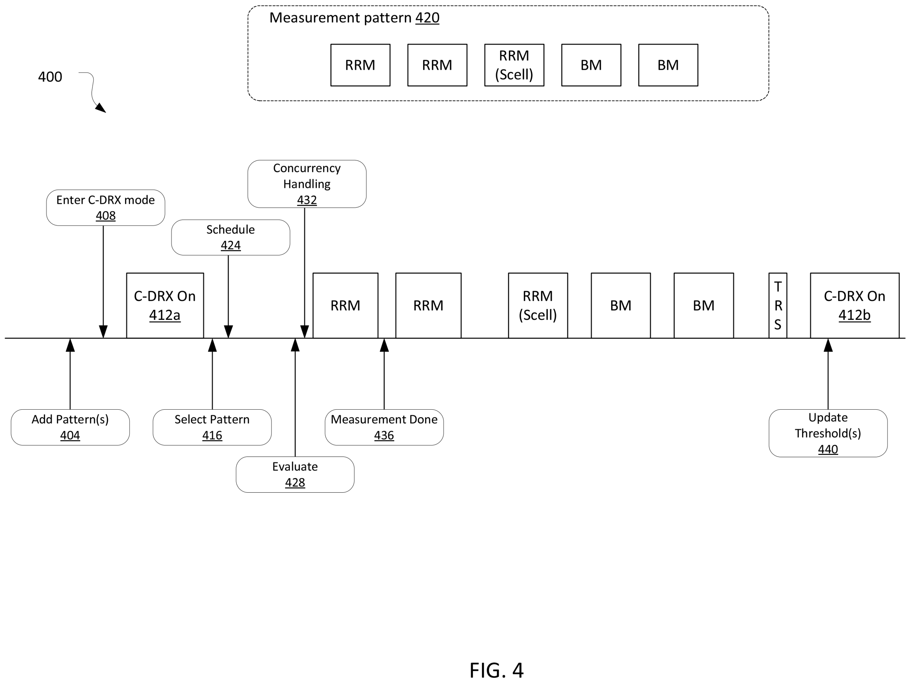

FIG. 4 illustrates an example timeline 400 depicting various operations associated with measurement pattern control in accordance with some embodiments. The operations may be performed by a measurement pattern controller (e.g., measurement pattern controller 300) using the APIs described above. The timeline 400 is merely an example and it will be apparent that different measurements, operations, and/or timing of operations may be used in accordance with embodiments herein. For example, the timeline 400 is depicted with reference to a C-DRX measurement pattern for one or more measurements performed in a C-DRX gap (e.g., in FR2). However, similar techniques may be used for another type of measurement pattern.

At 404, the timeline 400 may include to add one or more pattern instances to the set of candidate measurement patterns that are available to the measurement pattern controller. For example, the set of candidate measurement patterns may be determined at initialization (e.g., bootup) of the measurement pattern controller. In some embodiments, the measurement pattern controller may add or remove candidate measurement patterns from the initial set, e.g., based on one or more performance metrics, such as the QoS metrics described herein.

At 408, the UE may enter C-DRX mode with the network (e.g., as part of RRC connection setup). As part of the C-DRX mode, RF circuitry of the UE may be powered on during C-DRX on periods 412a-b and may be powered off during a C-DRX gap in between the C-DRX on periods 412a-b (e.g., except for waking up to perform the measurements in the C-DRX gap as described herein).

At 416, the measurement pattern controller may select the measurement pattern to use for the C-DRX gap (e.g., using the PatternSelect() API). The selected pattern may include a plurality of measurements. For example, FIG. 4 illustrates a measurement pattern 420 that includes two intra-frequency RRM measurements, one SCell RRM measurement, and two beam measurements (BMs, e.g., P1 serving cell beam measurements) that are performed within the C-DRX gap between the C-DRX on periods 412a-b. In some embodiments, the measurement pattern may correspond to a sequence of measurements that are performed over multiple C-DRX cycles.

The UE may further perform a TRS measurement prior to the next C-DRX on period 412b (e.g., in a TRS occasion that is earlier in time and as close to the C-DRX on period 412b as possible). The TRS measurement may or may not be considered part of the candidate measurement pattern, since the UE will typically perform the TRS measurement in every C-DRX gap prior to the subsequent C-DRX on period (e.g., for time and/or frequency tracking). In some embodiments, the measurement pattern may be selected at the beginning of the C-DRX gap as shown in the timeline 400. In other embodiments, the measurement pattern may be selected at a different time, such as during the C-DRX on period 412a.

At 424, the measurement pattern controller may schedule the measurements to be performed in the C-DRX gap (e.g., using the Schedule() API). The wakeup times may be stored to control wakeup of RF circuitry. The scheduling may take into account preference information for preferred timing of the measurements. For example, it may be preferable for the measurement to occur inside the C-DRX on duration 412a and/or 412b. If no measurement occasion inside the C-DRX on duration is available (e.g., a measurement occasion is not configured or there is a conflict that prevents the measurement), then a measurement occasion as close as possible to the C-DRX on duration may be scheduled (e.g., to save power).

At 428, the measurement pattern controller may evaluate a scheduled measurement (e.g., using the Evaluate() API). The measurement pattern controller may perform the evaluation for each measurement (e.g., each wakeup). The measurement pattern controller may configure the RF circuitry to perform the measurement based on the evaluation. In some embodiments, the measurement pattern controller may modify the measurement (e.g., skip, repeat, mute, and/or abort) based on the evaluation.

At 432, the measurement pattern controller may perform concurrency handling for the scheduled measurement. As with the evaluation, the concurrency handling may be performed for each scheduled measurement. To perform the concurrency handling, the measurement pattern controller may check if the scheduled measurement overlaps with another event (e.g., another measurement or reception occasion). The measurement pattern controller may reschedule or skip the measurement based on the overlap. In some embodiments, the measurement pattern controller may determine whether the scheduled measurement can be done in parallel with the other event, in which case the measurement is performed as scheduled. Otherwise, the measurement may be rescheduled or skipped.

At 436, the measurement pattern controller may perform a measurement done operation (e.g., using the MeasDone() API). The measurement done operation may be performed after individual measurements. For example, the timeline 400 illustrates the measurement done operation being performed after the first RRM measurement, but the measurement done operation may also be performed after other measurements of the measurement pattern. During the measurement done operation, the measurement pattern controller may increment a pattern counter (e.g., to track progress of the measurement pattern) and/or maintain state variables.

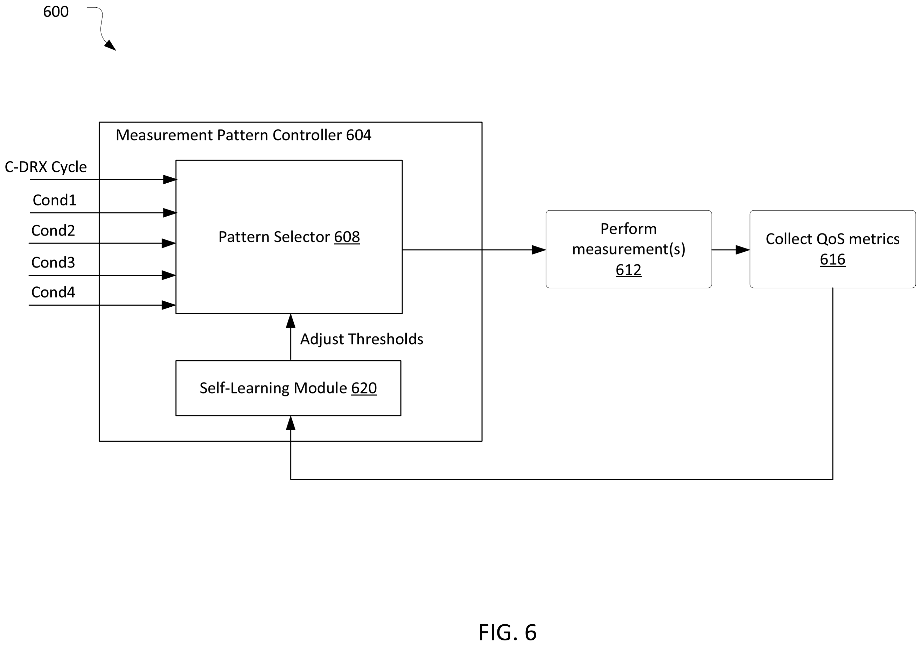

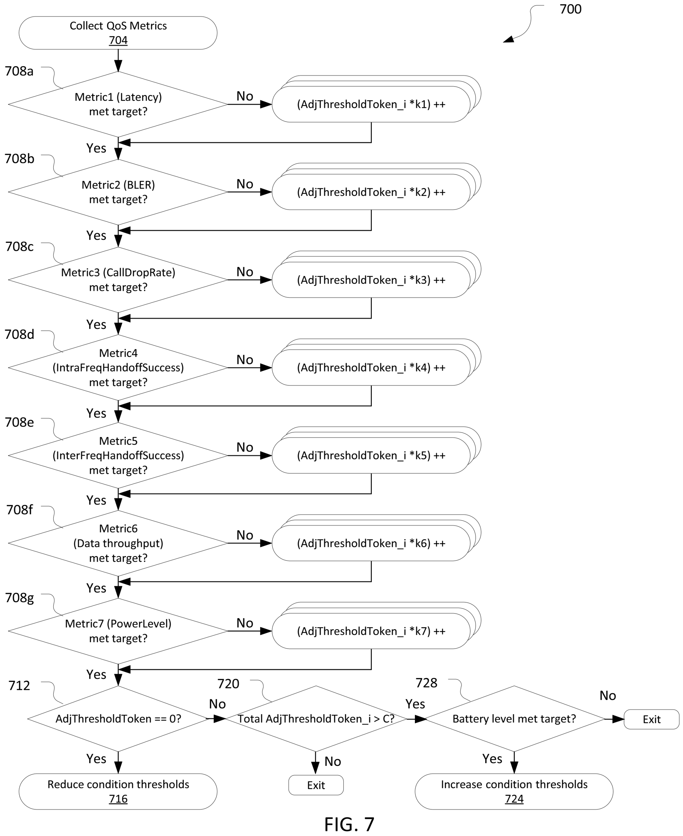

At 440, the measurement pattern controller may update one or more thresholds used for pattern selection (e.g., using the SelfLearningUpdate() API). The one or more thresholds may be updated via a self-learning procedure, e.g., as discussed further below with respect to FIGS. 6 and 7. For example, the one or more thresholds may be updated based on feedback such as a user situation and/or a comparison of one or more QoS metrics to respective targets.

In some embodiments, the one or more thresholds may be updated during the subsequent C-DRX on period 412b, as shown in FIG. 4. However, the one or more thresholds may also be updated at another time. The one or more thresholds may be updated every C-DRX cycle or after multiple cycles.

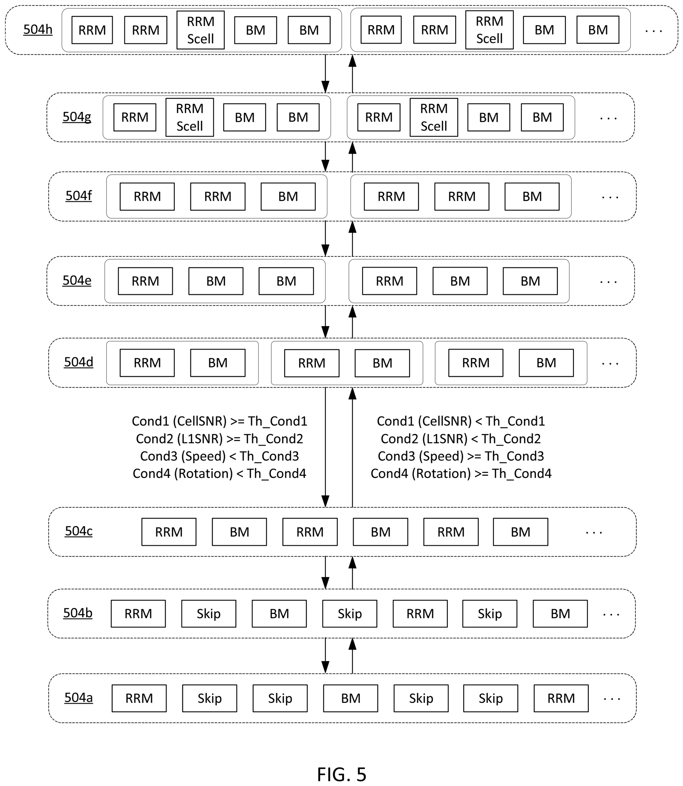

FIG. 5 illustrates an example of measurement pattern selection in accordance with some embodiments. As shown, a measurement pattern may be selected from a plurality of candidate measurement patterns 504a-h. In an example, the measurement patterns 504a-h may be C-DRX measurement patterns, e.g., for FR2. However, the techniques of FIG. 5 may also be used for selection of other types of measurement patterns in accordance with embodiments herein.

The candidate measurement patterns 504a-h may be arranged in an order, e.g., as shown, with candidate measurement patterns in decreasing order (e.g., down toward measurement pattern 504a in FIG. 5) generally having less frequent measurements and candidate measurement patterns in increasing order (e.g., up toward measurement pattern 504h in FIG. 5) generally having more frequent measurements. In some embodiments, the candidate measurement patterns 504a-h may include "slow" measurement patterns 504a-c and "fast" measurement patterns 504d-h. The slow measurement patterns 504a-c may correspond to a sequence of measurement instances, with one measurement instance in the sequence being performed per C-DRX gap. With the measurement pattern 504c, one measurement is scheduled in each C-DRX gap, while with measurement patterns 504b and 504a no measurement is scheduled for one or more C-DRX gaps (indicated by "Skip").

The fast measurement patterns 504d-h may correspond to a sequence of measurements, with multiple measurements being scheduled per C-DRX gap (e.g., represented by the groupings surrounded by solid lines in FIG. 5). The groups of measurements performed in different C-DRX gaps for a given measurement pattern may be the same or different. The fast measurement patterns 504d-h in increasing order may generally have more measurements per C-DRX gap. Additionally, or alternatively, the fast measurement patterns 504a-d may include different types of measurements. For example, measurement patterns 504g and 504h include an SCell RRM measurement, which may be used for mobility (e.g., to initiate and/or perform a handover based on poor network conditions).

The measurement pattern controller may transition the selected measurement pattern between adjacent candidate measurement patterns 504a-h based on a comparison of one or more conditions to respective thresholds. The conditions may include channel conditions, such as cell signal-to-noise ratio (SNR), layer 1 (L1) SNR (e.g., L1 beam SNR), and/or mobility conditions (e.g., speed and/or rotation of the UE).

In some embodiments, a candidate measurement pattern and/or a transition from a first candidate measurement pattern to a second candidate measurement pattern may be associated with a set of one or more thresholds that are to be met to use the candidate measurement pattern and/or perform the transition. For example, FIG. 5 illustrates a set of four thresholds that are compared with respective conditions (Cell SNR, L1 SNR (e.g., L1 beam SNR), UE speed, UE rotation). Other conditions and/or number of conditions may be used in other embodiments.

In one example, the condition thresholds may be associated with a particular transition (e.g., from the measurement pattern 504d to the measurement pattern 504c or from the measurement pattern 504d to the measurement pattern 504e). The measurement pattern controller may perform the transition if the associated condition thresholds are met. In some embodiments, the condition thresholds to transition from a first measurement pattern to a second measurement pattern may be different than the condition thresholds to transition from the second measurement pattern to the first measurement pattern for control of hysteresis. In other embodiments, the condition thresholds may be the same in both directions.

In another example, the condition thresholds may be associated with a particular candidate measurement pattern. For example, all of the condition thresholds associated with a candidate measurement pattern may need to be met for the candidate measurement pattern to be selected. The measurement pattern controller may select the slowest candidate measurement pattern for which all of the associated condition thresholds are met.

FIG. 6 illustrates a framework 600 for updating one or more condition thresholds for measurement pattern selection in accordance with some embodiments. The framework 600 may utilize a self-learning scheme to update the condition thresholds based on one or more metrics.

As shown, a measurement pattern controller 604 may include a pattern selector 608 to perform pattern selection (e.g., using the PatternSelect() API). In some embodiments, the pattern selection may be performed as shown and described with respect to FIG. 5. The pattern selector 604 may receive one or more conditions (e.g., Cond1 - Cond4) and information associated with a C-DRX cycle (e.g., the current measurement pattern). The pattern selector 604 may select a measurement pattern for the C-DRX cycle based on the one or more conditions (e.g., based on a comparison of the one or more conditions with respective condition thresholds).

At shown at 612, the UE may perform measurements for the selected pattern for one or more C-DRX cycles. At 616, the UE may collect one or more metrics associated with the UE. The metrics may correspond to QoS and/or quality-of-experience (QoE) metrics. For example, the metrics may include one or more of latency, block error rate (BLER), call drop rate, intra frequency handoff success, inter-frequency handoff success, data throughput, and/or power level (e.g., the power level of the UE). In some embodiments, the metrics may be associated with a primary/dominant application of the UE (e.g., an application that is being actively used by the user).

The metrics may be provided to a self-learning module 620 of the UE. The self-learning module 620 may update one or more of the condition thresholds based on the metrics. In some embodiments, the self-learning module 620 may compare the metrics to respective metric thresholds and update the condition thresholds based on results of the comparisons. For example, if the metric thresholds are not met (e.g., poorer than expected performance), the condition thresholds may be increased thereby biasing the measurement pattern selection toward a faster measurement rate. If the metric thresholds are exceeded (e.g., better than expected performance), the condition thresholds may be reduced thereby biasing the measurement pattern selection toward a slower measurement rate. Updating the condition thresholds may enable the selected measurement pattern to correspond to the metrics (e.g., indicative of user experience).

FIG. 7 illustrates an example procedure 700 for updating one or more condition thresholds in accordance with some embodiments. The procedure 700 may be performed by a UE or a component thereof (e.g., the measurement pattern controller of the UE, which may be implemented by processor circuitry).

At 704, the procedure 700 may include to collect one or more metrics (e.g., QoS metrics). For example, the procedure 700 is illustrated in FIG. 7 to use seven metrics. It will be apparent that a different number of metrics may be used.

In some embodiments, the one or more metrics may be associated with a dominant user application. Accordingly, the procedure 700 may include determining the dominant user application, e.g., based on the characteristics of one or more applications that are actively running on the UE. For example, the dominant user application may be determined based on whether the application is using one or more components of the UE such as the display, microphone, speakers, camera, etc., and/or otherwise interacts with the user.

At 708a-g, the procedure 700 may include to determine whether a respective metric (e.g., Metric1 to Metric 7) met a corresponding target value. If not, then an adjustment token (AdjThresholdToken_i) may be added to a total token count. The total token count may be associated with a respective set of condition thresholds. The adjustment token for different metrics may be weighted differently (e.g., using a factor k) to enable different contributions for different metrics.

At 712, the procedure 700 may include to determine whether the total token count is equal to zero. If yes, then at 716 the corresponding condition thresholds are reduced (e.g., to bias toward selection of a slower rate measurement pattern).

At 720, the procedure 700 may include to determine whether the total token count exceeds an adjustment threshold C (which may be greater than zero). If no, then the condition thresholds are not adjusted and the total token count is maintained for the next iteration of the procedure 700 (which may then result in the total token count increasing above the adjustment threshold). If it is determined at 720 that the total token count exceeds the adjustment threshold, then the corresponding condition thresholds may be increased as shown at 724 (e.g., to bias toward selection of a faster rate measurement pattern). Additionally, the total token count may be reset to zero.

In some embodiments, the increase of the condition thresholds may be subject to a target battery level of the UE. For example, at 728, the procedure 700 may include to determine whether the battery level of the UE meets the target battery level (e.g., is greater than a threshold battery level). The condition thresholds may be increased at 724 if the battery level meets the target battery level. It may be better not to increase the condition thresholds when the UE has a low battery level in order to conserve battery.

The procedure 700 may dynamically align the condition thresholds with user experience as indicated by the one or more metrics.

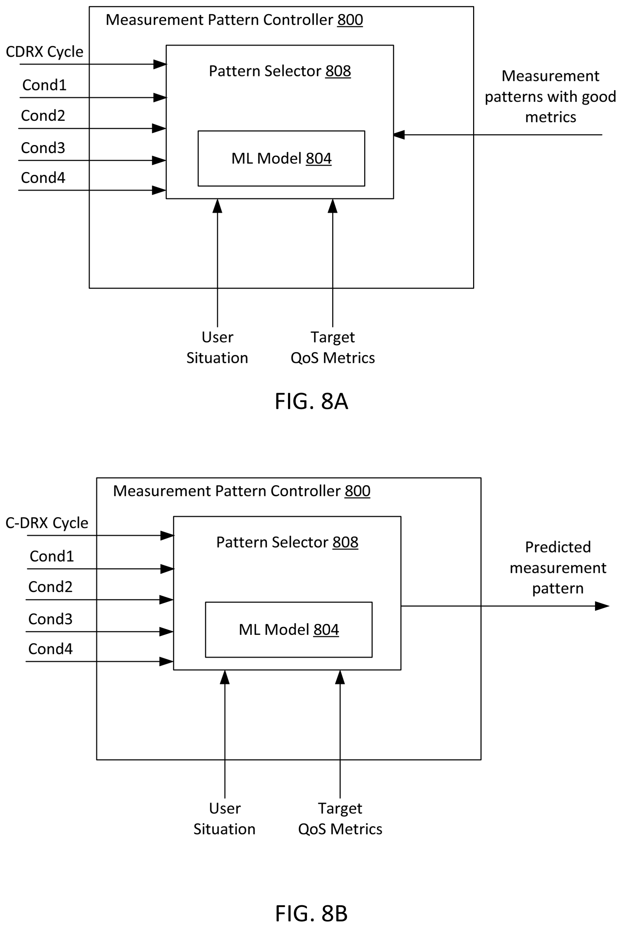

FIGs. 8A and 8B illustrate an example of measurement pattern controller 800 that utilizes a machine learning (ML) model 804 for pattern selection in accordance with some embodiments. The measurement pattern controller 800 and/or ML model 804 may be implemented by a UE or components thereof and/or another device in communication with the UE (e.g., in the cloud). The ML model 804 may be used by a pattern selector 808 of the measurement pattern controller 800. For example, the pattern selector 808 may utilize the PatternSelect() API to perform pattern selection based on the ML model 804

FIG. 8A illustrates training of the ML model 804. The ML model 804 may be trained with various inputs as training data, such as channel conditions (e.g., Cell SNR and/or L1 beam SNR), mobility conditions (e.g., speed and/or rotation), target QoS metrics (e.g., latency, BLER, call drop rate, intra-frequency handoff success, inter-frequency handoff success, data throughput, and/or power level), and/or user situation information (e.g., location, time of day, and/or activity information). The activity information may indicate one or more applications that may be used by the user. The training data may further indicate measurement patterns that provide good (e.g., the best) performance for respective sets of inputs.

FIG. 8B illustrates operation of the ML model 804 when deployed (e.g., after training). The ML model 804 may receive input information such as channel conditions, mobility conditions, QoS metrics, QoS targets, and/or user situation information. The user situation information may indicate an application that is being used and/or predicted to be used. The ML model may output a measurement pattern to use based on the inputs (e.g., optimized to provide performance that meets or exceeds the QoS targets with efficient power usage). Alternatively, the ML model 804 may output condition thresholds for the UE to use to transition between candidate measurement patterns as discussed herein.

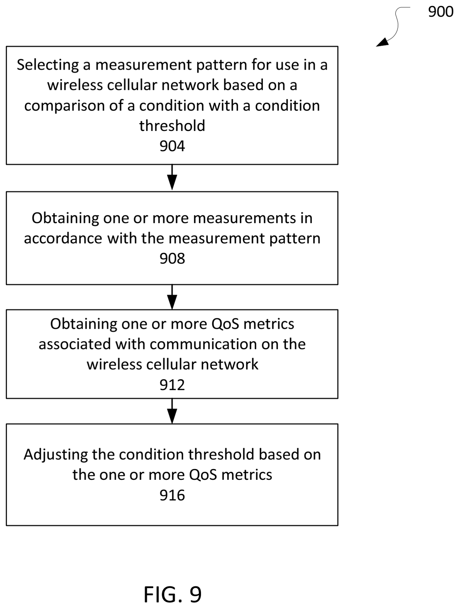

FIG. 9 is an operational flow or algorithmic structure 900 for measurement pattern control, in accordance with some embodiments. The operational flow/algorithmic structure 900 may be implemented by a UE such as, for example, UE 104, or components thereof, for example, processors 1204A.

The operational flow or algorithmic structure 900 may include, at 904, selecting a measurement pattern for use in a wireless cellular network based on a comparison of a condition with a condition threshold. In some embodiments, the measurement pattern may be selected from a plurality of candidate measurement patterns. In some embodiments, the measurement pattern may be selected based on a plurality of conditions (e.g., respective comparisons of the individual conditions with corresponding condition thresholds). The conditions may include, for example, one or more channel conditions (e.g., SNR, such as cell SNR and/or L1 beam SNR) and/or one or more user mobility conditions (e.g., speed and/or rotation of the UE).

The operational flow or algorithmic structure 900 may further include, at 908, obtaining one or more measurements in accordance with the measurement pattern. In some embodiments, the selected measurement pattern may be a C-DRX measurement pattern and the one or more measurements may be obtained in a C-DRX gap. In other embodiments, the one or more measurements may include one or more connected active-mode measurements, mmW antenna multi-panel measurements, idle-mode frequency scanning measurements, and/or multi-CC measurements.

The operational flow or algorithmic structure 900 may further include, at 912, obtaining one or more QoS metrics associated with communication on the wireless cellular network. For example, the QoS metrics may include one or more of a latency, a BLER, a call drop rate, an intra-frequency handoff success metric, an inter-frequency handoff success metric, a data throughput, or a power level.

The operational flow or algorithmic structure 900 may further include, at 916, adjusting the condition threshold based on the one or more QoS metrics. For example, if a QoS metric does not meet a target, the condition threshold may be adjusted to bias the UE toward selection of a faster measurement pattern (e.g., with more frequent measurements). If the QoS metric exceeds the target (or a different target), the condition threshold may be adjusted to bias the UE toward selection of a slower measurement pattern (e.g., with less frequent measurements). In some embodiments, the condition threshold may be adjusted in accordance with procedure 700 of FIG. 7.

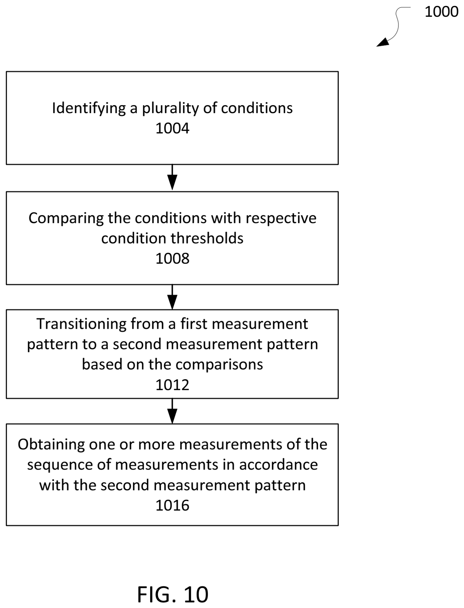

FIG. 10 is another operational flow or algorithmic structure 1000 for measurement pattern control, in accordance with some embodiments. The operational flow/algorithmic structure 1000 may be implemented by a UE such as, for example, UE 104, or components thereof, for example, processors 1204A.

The operational flow or algorithmic structure 1000 may include, at 1004, identifying a plurality of conditions. The conditions may include, for example, one or more channel conditions (e.g., SNR, such as cell SNR and/or L1 beam SNR) and/or one or more user mobility conditions (e.g., speed and/or rotation of the UE).

The operational flow or algorithmic structure 1000 may further include, at 1008, comparing the conditions with respective condition thresholds. The condition thresholds may be associated with a candidate measurement pattern and/or a transition from one measurement pattern to another measurement pattern.

The operational flow or algorithmic structure 1000 may further include, at 1012, transitioning from a first measurement pattern to a second measurement pattern based on the comparisons. In some embodiments, the first and second measurement patterns may indicate respective sequences of measurements to be performed in one or more connected-mode discontinuous reception C-DRX gaps.

The operational flow or algorithmic structure 1000 may further include, at 1016, obtaining one or more measurements of the sequence of measurements in accordance with the second measurement pattern. For example, the one or more measurements may include one or more C-DRX gap measurements (e.g., serving cell RRM measurements, secondary cell RRM measurements, beam measurements, measurement gap measurements, and/or TRS measurements), connected active-mode measurements, mmW antenna multi-panel measurements, idle-mode frequency scanning measurements, and/or multi-CC measurements.

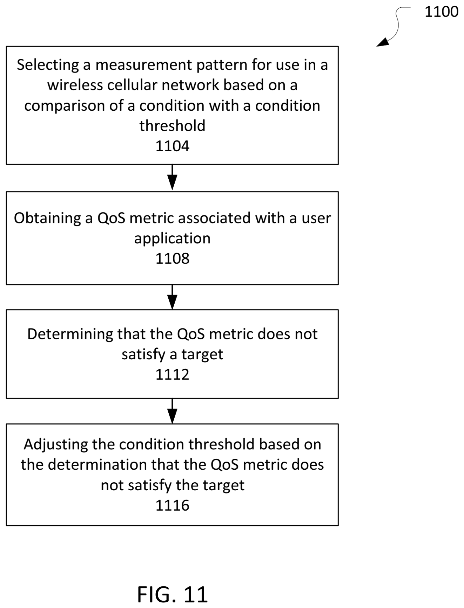

FIG. 11 is another operational flow or algorithmic structure 1100 for measurement pattern control, in accordance with some embodiments. The operational flow/algorithmic structure 1100 may be implemented by a UE such as, for example, UE 104, or components thereof, for example, processors 1204A.

The operational flow or algorithmic structure 1100 may include, at 1104, selecting a measurement pattern for use in a wireless cellular network based on a comparison of a condition with a condition threshold. The condition may include, for example, a channel condition (e.g., SNR, such as cell SNR and/or L1 beam SNR) and/or a user mobility condition (e.g., speed and/or rotation of the UE).

The operational flow or algorithmic structure 1100 may further include, at 1108, obtaining a QoS metric associated with a user application. The QoS metric may include, for example, a latency, a BLER, a call drop rate, an intra-frequency handoff success metric, an inter-frequency handoff success metric, a data throughput, and/or a power level.

The operational flow or algorithmic structure 1100 may further include, at 1112, determining that the QoS metric does not satisfy a target.

The operational flow or algorithmic structure 1100 may further include, at 1116, adjusting the condition threshold based on the determination that the QoS metric does not satisfy the target. For example, the condition threshold may be adjusted to bias the UE toward selection of a faster measurement pattern (e.g., with more frequent measurements). In some embodiments, the condition threshold may be adjusted in accordance with procedure 700 of FIG. 7.

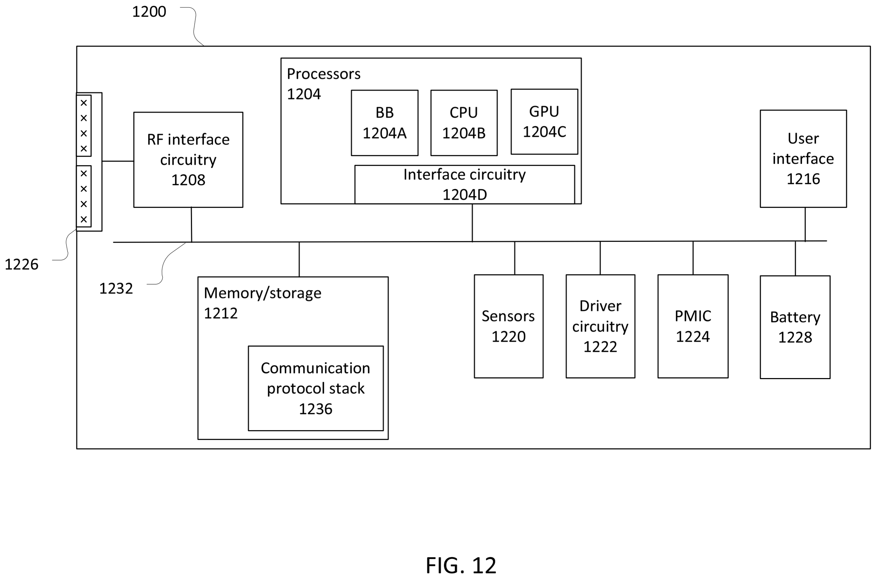

FIG. 12 illustrates a UE 1200 in accordance with some embodiments. The UE 1200 may be similar to and substantially interchangeable with UE 104. The UE 1200 may implement a measurement pattern controller, such as measurement pattern controller 300, measurement pattern controller 604, and/or measurement pattern controller 800.

The UE 1200 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 1200 may include processors 1204, RF interface circuitry 1208, memory/storage 1212, user interface 1216, sensors 1220, driver circuitry 1222, power management integrated circuit (PMIC) 1224, antenna 1226, and battery 1228. The components of the UE 1200 may be implemented as integrated circuits (ICs), portions thereof, discrete electronic devices, or other modules, logic, hardware, software, firmware, or a combination thereof. In some embodiments, at least one processor 1204 may include RF interface circuitry 1208. The block diagram of FIG. 12 is intended to show a high-level view of some of the components of the UE 1200. However, some of the components shown may be omitted, additional components may be present, and different arrangement of the components shown may occur in other implementations.

The components of the UE 1200 may be coupled with various other components over one or more interconnects 1232, which may represent any type of interface, input/output, bus (local, system, or expansion), transmission line, trace, or optical connection that allows various circuit components (on common or different chips or chipsets) to interact with one another.

The processors 1204 may include processor circuitry such as, for example, baseband processor circuitry (BB) 1204A, central processor unit circuitry (CPU) 1204B, and graphics processor unit circuitry (GPU) 1204C. The processors 1204 may include any type of circuitry or processor circuitry that executes or otherwise operates computer-executable instructions, such as program code, software modules, or functional processes from memory/storage 1212 to cause the UE 1200 to perform operations as described herein (e.g., operations associated measurement pattern selection and/or control). The processors 1204 may also include interface circuitry 1204D to enable communication, e.g., by communicatively coupling the processor circuitry with one or more other components of the UE 1200.

In some embodiments, the baseband processor 1204A may access a communication protocol stack 1236 in the memory/storage 1212 to communicate over a 3GPP compatible network. In general, the baseband processor 1204A may access the communication protocol stack 1236 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 1208.

The baseband processor 1204A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 1212 may include one or more non-transitory, computer-readable media that includes instructions (for example, communication protocol stack 1236) that may be executed by one or more of the processors 1204 to cause the UE 1200 to perform operations as described herein (e.g., operations associated with measurement pattern selection and/or control).

The memory/storage 1212 includes any type of volatile or non-volatile memory that may be distributed throughout the UE 1200. In some embodiments, some of the memory/storage 1212 may be located on the processors 1204 themselves (for example, memory/storage 1212 may be part of a chipset that corresponds to the baseband processor 1204A), while other memory/storage 1212 is external to the processors 1204 but accessible thereto via a memory interface. The memory/storage 1212 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1208 may include transceiver circuitry and a radio frequency front module (RFEM) that allows the UE 1200 to communicate with other devices over a radio access network. The RF interface circuitry 1208 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna 1226 and proceed to filter and amplify (with a low-noise amplifier) the signal. The signal may be provided to a receiver of the transceiver that down-converts the RF signal into a baseband signal that is provided to the baseband processor of the processors 1204.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1226.

In various embodiments, the RF interface circuitry 1208 may be configured to transmit/receive signals in a manner compatible with NR access technologies.

The antenna 1226 may include antenna elements to convert electrical signals into radio waves to travel through the air and to convert received radio waves into electrical signals. The antenna elements may be arranged into one or more antenna panels. The antenna 1226 may have antenna panels that are omnidirectional, directional, or a combination thereof to enable beamforming and multiple input, multiple output communications. The antenna 1226 may include microstrip antennas, printed antennas fabricated on the surface of one or more printed circuit boards, patch antennas, or phased array antennas. The antenna 1226 may have one or more panels designed for specific frequency bands including bands in FR1 or FR2.

The user interface 1216 includes various input/output (I/O) devices designed to enable user interaction with the UE 1200. The user interface 1216 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1200.

The sensors 1220 may include devices, modules, or subsystems whose purpose is to detect events or changes in their environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1222 may include software and hardware elements that operate to control particular devices that are embedded in the UE 1200, attached to the UE 1200, or otherwise communicatively coupled with the UE 1200. The driver circuitry 1222 may include individual drivers allowing other components to interact with or control various input/output (I/O) devices that may be present within, or connected to, the UE 1200. For example, driver circuitry 1222 may include a display driver to control and allow access to a display device, a touchscreen driver to control and allow access to a touchscreen interface, sensor drivers to obtain sensor readings of sensors 1220 and control and allow access to sensors 1220, drivers to obtain actuator positions of electro-mechanic components or control and allow access to the electro-mechanic components, a camera driver to control and allow access to an embedded image capture device, audio drivers to control and allow access to one or more audio devices.

The PMIC 1224 may manage power provided to various components of the UE 1200. In particular, with respect to the processors 1204, the PMIC 1224 may control power-source selection, voltage scaling, battery charging, or DC-to-DC conversion.

A battery 1228 may power the UE 1200, although in some examples the UE 1200 may be mounted deployed in a fixed location and may have a power supply coupled to an electrical grid. The battery 1228 may be a lithium ion battery, a metal-air battery, such as a zinc-air battery, an aluminum-air battery, a lithium-air battery, and the like. In some implementations, such as in vehicle-based applications, the battery 1228 may be a typical lead-acid automotive battery.

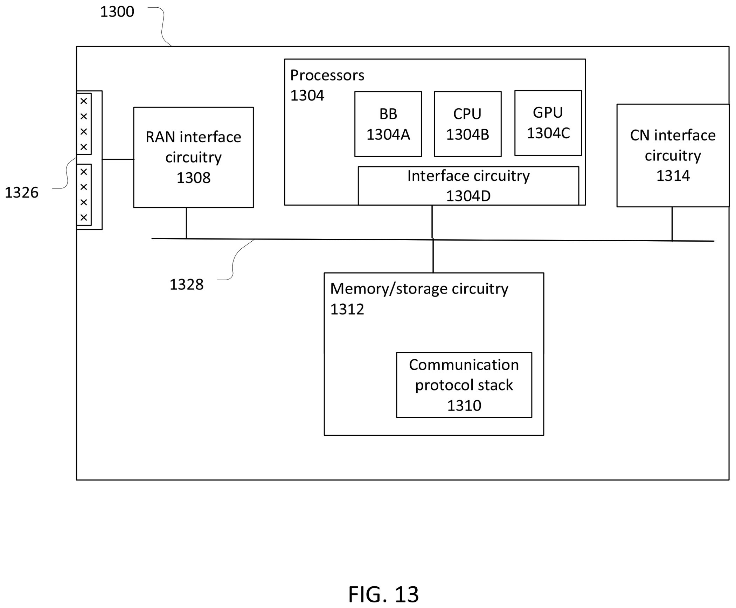

FIG. 13 illustrates a network device 1300 in accordance with some embodiments. The network device 1300 may be similar to, and substantially interchangeable with, the base station 108 and/or a component of the CN 112.

The network device 1300 may include processors 1304, RF interface circuitry 1308 (if implemented as a base station), core network (CN) interface circuitry 1314, memory/storage circuitry 1312, and antenna structure 1326.

The components of the network device 1300 may be coupled with various other components over one or more interconnects 1328.

The processors 1304, RF interface circuitry 1308, memory/storage circuitry 1312 (including communication protocol stack 1310), antenna structure 1326, and interconnects 1328 may be similar to like-named elements shown and described with respect to FIG. 12. In some embodiments, at least one of processors 1304 may include RF interface circuitry 1308.

The processors 1304 may include processor circuitry such as, for example, baseband processor circuitry (BB) 1304A, central processor unit circuitry (CPU) 1304B, and graphics processor unit circuitry (GPU) 1304C. The processors 1304 may include any type of circuitry or processor circuitry that executes or otherwise operates computer-executable instructions, such as program code, software modules, or functional processes from memory/storage circuitry 1312 to cause the network device 1300 to perform operations as described herein (e.g., operations associated with measurement pattern selection and/or control). The processors 1304 may also include interface circuitry 1304D to communicatively couple the processor circuitry with one or more other components of the network device 1300.

The CN interface circuitry 1314 may provide connectivity to a core network, for example, a 5^{th} Generation Core network (5GC) using a 5GC-compatible network interface protocol such as carrier Ethernet protocols, or some other suitable protocol. Network connectivity may be provided to/from the network device 1300 via a fiber optic or wireless backhaul. The CN interface circuitry 1314 may include one or more dedicated processors or FPGAs to communicate using one or more of the aforementioned protocols. In some implementations, the CN interface circuitry 1314 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

Some further examples of various embodiments are provided below.

Example 1 includes method comprising: selecting a measurement pattern for use in a wireless cellular network based on a comparison of a condition with a condition threshold; obtaining one or more measurements in accordance with the measurement pattern; obtaining one or more quality-of-service (QoS) metrics associated with communication on the wireless cellular network; and adjusting the condition threshold based on the one or more QoS metrics.

Example 2 includes the method of example 1 or some other example herein, wherein the condition is a first condition and the condition threshold is a first condition threshold, wherein selecting the measurement pattern includes selecting a measurement pattern for use in the wireless cellular network based on respective comparisons of a plurality of conditions with respective condition thresholds, and wherein the method further comprises adjusting the plurality of condition thresholds based on the one or more QoS metrics.

Example 3 includes the method of example 1 or some other example herein, wherein the condition includes a channel condition or a user mobility condition.

Example 4 includes the method of example 3 or some other example herein, wherein the channel condition includes a cell signal-to-noise ratio (SNR) or a layer 1 (L1) beam SNR, or wherein the user mobility condition includes a speed or a rotation of a user equipment (UE).

Example 5 includes the method of example 1 or some other example herein, wherein the one or more QoS metrics include one or more of a latency, a block error rate (BLER), a call drop rate, an intra-frequency handoff success metric, an inter-frequency handoff success metric, a data throughput, or a power level.

Example 6 includes the method of example 1 or some other example herein, wherein the one or more QoS metrics include a plurality of QoS metrics, and wherein adjusting the condition threshold includes: determining that a respective QoS metric of the plurality of QoS metrics satisfies a corresponding target; adding a token to a total token count based on determining that the respective QoS metric satisfies the target; and adjusting the condition threshold based on the total token count exceeding a token threshold.

Example 7 includes the method of example 6 or some other example herein, wherein the token is weighted based on the QoS metric.

Example 8 includes the method of example 1 or some other example herein, wherein adjusting the condition threshold includes providing the one or more QoS metrics to a machine learning model to generate an adjusted condition threshold.

Example 9 includes the method of example 1 or some other example herein, wherein the one or more measurements are obtained in a connected-mode discontinuous reception (C-DRX) gap between C-DRX on periods.

Example 10 includes the method of example 1 or some other example herein, wherein the measurement pattern is a connected-mode discontinuous reception (C-DRX) measurement pattern, a connected active mode measurement pattern, a millimeter wave antenna multi-panel measurement pattern, an idle mode frequency scanning measurement pattern, or a multiple component carrier measurement pattern.

Example 11 includes one or more computer-readable media having instructions that, when executed, cause processing circuitry to: identify a plurality of conditions; compare the conditions with respective condition thresholds; transition from a first measurement pattern to a second measurement pattern based on the comparisons, wherein the first and second measurement patterns indicate respective sequences of measurements to be performed in one or more connected-mode discontinuous reception (C-DRX) gaps; and obtain one or more measurements of the sequence of measurements in accordance with the second measurement pattern.

Example 12 includes the one or more computer-readable media of example 11 or some other example herein, wherein the plurality of conditions include a channel condition and a user mobility condition.

Example 13 includes the one or more computer-readable media of example 12 or some other example herein, wherein the channel condition includes a cell signal-to-noise ratio (SNR) or a layer 1 (L1) beam SNR, and wherein the user mobility condition includes a speed or a rotation of a user equipment (UE).

Example 14 includes the one or more computer-readable media of example 11 or some other example herein, wherein the instructions, when executed, further cause the processing circuitry to: obtain one or more quality-of-service (QoS) metrics; and adjust the condition thresholds based on the one or more QoS metrics.

Example 15 includes the one or more computer-readable media of example 14 or some other example herein, wherein the one or more QoS metrics include one or more of a latency, a block error rate (BLER), a call drop rate, an intra-frequency handoff success metric, an inter-frequency handoff success metric, a data throughput, or a power level.

Example 16 includes the one or more computer-readable media of example 14 or some other example herein, wherein the one or more QoS metrics include a plurality of QoS metrics, and wherein, to adjust the condition thresholds, the processing circuitry is to: determine that a respective QoS metric of the plurality of QoS metrics satisfies a corresponding target; add a token to a total token count based on the determination that the respective QoS metric satisfies the target; and adjust the condition thresholds based on the total token count exceeding a token threshold.

Example 17 includes the one or more computer-readable media of example 16 or some other example herein, wherein the token is weighted based on the QoS metric.

Example 18 includes the one or more computer-readable media of example 11 or some other example herein, wherein the second measurement pattern includes fewer measurements per C-DRX gap than the first measurement pattern.

Example 19 includes an apparatus comprising processing circuitry to: select a measurement pattern for use in a wireless cellular network based on a comparison of a condition with a condition threshold; obtain a quality-of-service (QoS) metric associated with a user application; determine that the QoS metric does not satisfy a target; and adjust the condition threshold based on the determination that the QoS metric does not satisfy the target. The apparatus may further comprise interface circuitry coupled to the processing circuitry to enable communication.

Example 20 includes the apparatus of example 19 or some other example herein, wherein the condition includes a user mobility condition.

Example 21 includes the apparatus of example 19 or some other example herein, wherein the QoS metric includes a latency, a block error rate (BLER), a call drop rate, an intra-frequency handoff success metric, an inter-frequency handoff success metric, a data throughput, or a power level.

Example 22 includes the apparatus of example 19 or some other example herein, wherein the measurement pattern is a connected-mode discontinuous reception (C-DRX) measurement pattern, a connected active mode measurement pattern, a millimeter wave antenna multi-panel measurement pattern, an idle mode frequency scanning measurement pattern, or a multiple component carrier measurement pattern.

Another example may include an apparatus comprising means to perform one or more elements of a method described in or related to any of examples 1-22, or any other method or process described herein.

Another example may include one or more non-transitory computer-readable media comprising instructions to cause an electronic device, upon execution of the instructions by one or more processors of the electronic device, to perform one or more elements of a method described in or related to any of examples 1-22, or any other method or process described herein.

Another example may include an apparatus comprising logic, modules, or circuitry to perform one or more elements of a method described in or related to any of examples 1-22, or any other method or process described herein.

Another example may include a method, technique, or process as described in or related to any of examples 1-22, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-22, or portions thereof.

Another example may include a signal as described in or related to any of examples 1-22, or portions or parts thereof.

Another example may include a datagram, information element, packet, frame, segment, PDU, or message as described in or related to any of examples 1-22, or portions or parts thereof, or otherwise described in the present disclosure.

Another example may include a signal encoded with data as described in or related to any of examples 1-22, or portions or parts thereof, or otherwise described in the present disclosure.

Another example may include a signal encoded with a datagram, IE, packet, frame, segment, PDU, or message as described in or related to any of examples 1-22, or portions or parts thereof, or otherwise described in the present disclosure.

Another example may include an electromagnetic signal carrying computer-readable instructions, wherein execution of the computer-readable instructions by one or more processors is to cause the one or more processors to perform the method, techniques, or process as described in or related to any of examples 1-22, or portions thereof.

Another example may include a computer program comprising instructions, wherein execution of the program by a processing element is to cause the processing element to carry out the method, techniques, or process as described in or related to any of examples 1-22, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
selecting a measurement pattern for use in a wireless cellular network based on a comparison of a condition with a condition threshold;
obtaining at least one measurement in accordance with the measurement pattern;
obtaining at least one quality-of-service (QoS) metric associated with communication on the wireless cellular network; and
adjusting the condition threshold based on the at least one QoS metric.

2. The method of claim 1, wherein the condition is a first condition and the condition threshold is a first condition threshold, wherein selecting the measurement pattern includes selecting a measurement pattern for use in the wireless cellular network based on respective comparisons of a plurality of conditions with respective condition thresholds, and wherein the method further comprises adjusting the plurality of condition thresholds based on the at least one QoS metric.

3. The method of any of claims 1-2, wherein the condition includes a channel condition or a user mobility condition; and, optionally,
wherein the channel condition includes a cell signal-to-noise ratio (SNR) or a layer 1 (L1) beam SNR, or wherein the user mobility condition includes a speed or a rotation of a user equipment (UE).

4. The method of any of claims 1-3, wherein the at least one QoS metric includes at least one of a latency, a block error rate (BLER), a call drop rate, an intra-frequency handoff success metric, an inter-frequency handoff success metric, a data throughput, or a power level.

5. The method of any of claims 1-4, wherein the at least one QoS metric includes a plurality of QoS metrics, and wherein adjusting the condition threshold includes:
determining that a respective QoS metric of the plurality of QoS metrics satisfies a corresponding target;
adding a token to a total token count based on determining that the respective QoS metric satisfies the target; and
adjusting the condition threshold based on the total token count exceeding a token threshold.

6. The method of claim 5, wherein the token is weighted based on the QoS metric.

7. The method of any of claims 1-6, wherein adjusting the condition threshold includes providing the at least one QoS metric to a machine learning model to generate an adjusted condition threshold; or
wherein the at least one measurement is obtained in a connected-mode discontinuous reception (C-DRX) gap between C-DRX on periods; or
wherein the measurement pattern includes a connected-mode discontinuous reception (C-DRX) measurement pattern, a connected active mode measurement pattern, a millimeter wave antenna multi-panel measurement pattern, an idle mode frequency scanning measurement pattern, or a multiple component carrier measurement pattern.

8. One or more computer-readable media having instructions that, when executed, cause processing circuitry to:
identify a plurality of conditions;
compare the conditions with respective condition thresholds;
transition from a first measurement pattern to a second measurement pattern based on the comparisons, wherein the first and second measurement patterns indicate respective sequences of measurements to be performed in at least one connected-mode discontinuous reception (C-DRX) gap; and
obtain at least one measurement of the sequence of measurements in accordance with the second measurement pattern.

9. The one or more computer-readable media of claim 8, wherein the plurality of conditions include a channel condition and a user mobility condition; and, optionally,
wherein the channel condition includes a cell signal-to-noise ratio (SNR) or a layer 1 (L1) beam SNR, and wherein the user mobility condition includes a speed or a rotation of a user equipment (UE).

10. The one or more computer-readable media of any of claims 8-9, wherein the instructions, when executed, further cause the processing circuitry to:
obtain at least one quality-of-service (QoS) metric; and
adjust the condition thresholds based on the at least one QoS metric; and, optionally,
wherein the at least one QoS metric includes at least one of a latency, a block error rate (BLER), a call drop rate, an intra-frequency handoff success metric, an inter-frequency handoff success metric, a data throughput, or a power level.

11. The one or more computer-readable media of claim 10, wherein the at least one QoS metric includes a plurality of QoS metrics, and wherein, to adjust the condition thresholds, the processing circuitry is to:
determine that a respective QoS metric of the plurality of QoS metrics satisfies a corresponding target;
add a token to a total token count based on the determination that the respective QoS metric satisfies the target; and
adjust the condition thresholds based on the total token count exceeding a token threshold; and, optionally,
wherein the token is weighted based on the QoS metric.

12. The one or more computer-readable media of any of claims 8-11, wherein the second measurement pattern includes fewer measurements per C-DRX gap than the first measurement pattern.

13. Processor circuitry to:
select a measurement pattern for use in a wireless cellular network based on a comparison of a condition with a condition threshold;
obtain a quality-of-service (QoS) metric associated with a user application;
determine that the QoS metric does not satisfy a target; and
adjust the condition threshold based on the determination that the QoS metric does not satisfy the target.

14. The processor circuitry of claim 13, wherein the condition includes a user mobility condition.

15. The processor circuitry of any of claims 13-14, wherein the QoS metric includes a latency, a block error rate (BLER), a call drop rate, an intra-frequency handoff success metric, an inter-frequency handoff success metric, a data throughput, or a power level; or
wherein the measurement pattern is a connected-mode discontinuous reception (C-DRX) measurement pattern, a connected active mode measurement pattern, a millimeter wave antenna multi-panel measurement pattern, an idle mode frequency scanning measurement pattern, or a multiple component carrier measurement pattern.
